# EUROPEAN PATENT APPLICATION

(11) **EP 4 106 102 A1**
(43) Date of publication of application: **21.12.2022**
(21) Application number: 21767357.3
(22) Date of filing: 27.01.2021
(51) Int. Cl.: H01Q 1/24, H01Q 1/36, H01Q 1/48, H01Q 1/50, H01Q 5/314, H01Q 5/50, H01Q 13/10, H01Q 21/30

(54) **ANTENNA ASSEMBLY AND ELECTRONIC DEVICE**

(30) Priority: 12.03.2020 CN 202010169470; 12.03.2020 CN 202020306284 U
(71) Applicant: GUANGDONG OPPO MOBILE TELECOMMUNICATIONS CORP., LTD., Dongguan, Guangdong 523860 (CN)
(72) Inventor: YANG, Fan, Dongguan, Guangdong 523860 (CN)
(74) Representative: Manitz Finsterwald Patent- und Rechtsanwaltspartnerschaft mbB
(86) International application number: PCT/CN2021/073949
(87) International publication number: WO 2021/179825

(57) **Abstract**

An antenna assembly, which comprises: a conductive frame (110), provided with at least one slot (111), the slot (111) at least dividing the conductive frame (110) into a first conductive branch (113) and a second conductive branch (115) that are independent, wherein a feed point (S1) is provided on the first conductive branch (113), and a connection point (S2) is provided on the second conductive branch (115); a resonant circuit (210), a signal source (220) coupling a feed current signal to the first conductive branch (113) by means of the resonant circuit (210) and the feed point (S1), wherein the current signal is coupled to the second conductive branch (115) by means of the slot (111); generating a plurality of resonant frequencies on the first conductive branch (113) and the second conductive branch (115) under the resonant regulation by the resonant circuit (210); a switching circuit (230) used for performing switching regulation on the current signal on the second conductive branch (115), such that a radio frequency signal having a plurality of working bands is simultaneously radiated on the first conductive branch (113) and the second conductive branch (115), wherein at least two working bands are switchable.

## Description

### CROSS REFERENCE TO RELATED APPLICATIONS

The present disclosure claims priorities to Chinese Patent Application Nos. 202010169470.6 and 202020306284.8, filed on March 12, 2020, entitled "ANTENNA ASSEMBLY AND ELECTRONIC DEVICE", the entire contents of which are hereby incorporated by reference in their entireties.

### TECHNICAL FIELD

The present disclosure relates to a technical field of antennas, and in particular to an antenna assembly and an electronic device.

### BACKGROUND

Background information related to the present disclosure is provided by the statements herein which are not necessary to constitute the exemplary related art.

With the development of wireless communication technology, requirements for portabilities and appearances of electronic devices by users become higher and higher. An antenna of an electronic device having a metal frame is mainly realized based on the metal frame. A profile height of the metal frame is one of the main factors affecting a radiation efficiency of the metal frame. The profile height of the metal frame of the electronic device may be understood as a metal width of the metal frame in a thickness direction of a phone. Under a trend of pursuing an ultimate performance of an appearance of the phone, a design for a frame having a low profile height makes a new challenge to a performance of the antenna.

### SUMMARY OF THE DISCLOSURE

An antenna assembly and an electronic device are provided in various embodiments of the present disclosure.

According to a first aspect of the present disclosure, an antenna assembly is provided and includes a conductive frame defining at least one slot and divided into at least a first conductive branch and a second conductive branch separating from each other by the at least one slot, a feed point being arranged on the first conductive branch and a connecting point being arranged on the second conductive branch; a resonant circuit connected to a signal source and the feed point, the signal source being coupled to the first conductive branch and feeding a current signal to the first conductive branch through the resonant circuit and the feed point, the current signal being coupled to the second conductive branch through the slot, and multiple resonant frequencies being generated on the first conductive branch and the second conductive branch under a resonance adjustment of the resonant circuit; and a switching circuit connected between the connecting point and a ground terminal, and configured to perform a switching adjustment for the current signal coupled to the second conductive branch such that radio frequency signals including a plurality of operating frequency bands is radiated simultaneously on the first conductive branch and the second conductive branch; at least two of the operating frequency bands being switchable.

According to a second aspect of the present disclosure, an electronic device is provided and includes a substrate; a conductive frame defining at least one slot and divided into at least a first conductive branch and a second conductive branch separating from each other by the at least one slot, a feed point being arranged on the first conductive branch and a connecting point being arranged on the second conductive branch; a resonant circuit connected to a signal source and the feed point, the signal source being coupled to the first conductive branch and feeding a current signal to the first conductive branch through the resonant circuit and the feed point, the current signal being coupled to the second conductive branch through the slot, and multiple resonant frequencies being generated on the first conductive branch and the second conductive branch under a resonance adjustment of the resonant circuit; and a switching circuit connected between the connecting point and a ground terminal, and configured to perform a switching adjustment for the current signal coupled to the second conductive branch such that radio frequency signals including a plurality of operating frequency bands are radiated simultaneously on the first conductive branch and the second conductive branch; at least two of the operating frequency bands being switchable; the substrate being accommodated in a cavity enclosed by the conductive frame, and the resonant circuit and the signal source being arranged on the substrate.

According to the antenna assembly and the electronic device, the first conductive branch and the second conductive branch may share the same slot to simultaneously radiate a radio frequency signal of a first current signal and a radio frequency signal of a second current signal, such that space-utilizing rates of the slot and a conductive frame of the electronic device may be improved. In addition, an antenna radiator may be not required to be arranged separately, so as to reduce a thickness of the cellphone. A first radiator and a second radiator may be integrated on a top frame or a bottom frame, such that a pressure of integrating the antenna assembly on side frames may be reduced. A first current signal configured for generating multiple resonant frequencies may be excited on the first conductive branch by arranging the resonant circuit in the antenna assembly, such that the first radiator on the first conductive frame may simultaneously radiate a first radio frequency signal including multiple operating frequency bands. In this way, the performance of the antenna may be improved.

Details of one or more embodiments of the present disclosure are illustrated in accompanying drawings and descriptions in the following. Other features, purposes, and advantages of the present disclosure will become apparent in the specification, drawings and claims.

### BRIEF DESCRIPTION OF THE DRAWINGS

In order to more clearly describe the technical solutions in the embodiments of the present disclosure, the following will briefly introduce the drawings required in the description of the embodiments. Obviously, the drawings in the following description are only some embodiments of the present disclosure. For those skilled in the art, other drawings can be obtained based on these drawings without creative work.
FIG. 1 is a perspective, structural schematic view of an electronic device according to an embodiment of the present disclosure.
FIG. 2 is a first structural schematic view of an antenna assembly of the electronic device according to an embodiment of the present disclosure.
FIG. 3 is a second structural schematic view of the antenna assembly of the electronic device according to an embodiment of the present disclosure.
FIG. 4 is a third structural schematic view of the antenna assembly of the electronic device according to an embodiment of the present disclosure.
FIG. 5 is a fourth structural schematic view of the antenna assembly of the electronic device according to an embodiment of the present disclosure.
FIG. 6 is a fifth structural schematic view of the antenna assembly of the electronic device according to an embodiment of the present disclosure.
FIG. 7a is a simulation schematic diagram of a S11 parameter of the antenna assembly according to an embodiment of the present disclosure.
FIG. 7b is a simulation schematic diagram of an efficiency of the antenna assembly according to an embodiment of the present disclosure.
FIG. 8a is a simulation schematic diagram of the S11 parameter of the antenna assembly according to another embodiment of the present disclosure.
FIG. 8b is a simulation schematic diagram of the efficiency of the antenna assembly according to another embodiment of the present disclosure.
FIG. 9 is a sixth structural schematic view of the antenna assembly of the electronic device according to an embodiment of the present disclosure.

### DETAILED DESCRIPTION

In order to make purposes, technical solutions, and advantages of the present disclosure more clear and more understandable, the present disclosure will be further described in detail in the following with reference to the accompanying drawings and embodiments. It should be understood that specific embodiments described herein are only configured to explain the present disclosure, but not to limit the present disclosure.

It can be understood that terms such as "first", "second, etc., used in the present disclosure may be configured to describe various elements herein. The various elements are not limited to the terms. The terms are simply configured to distinguish a first element from another element, and not intended to indicate or imply relative importance or significance or to imply the number of indicated technical features. Thus, the feature defined with "first", "second", or the like may include one or more of such a feature. In the description of the present disclosure, it should be noted that "a plurality of' or "multiple" means two or more, unless specified otherwise.

It should be noted that a description of an element being "attached to" another element may indicate that the element is directly on the another element or that an intervening element may exist. When an element is considered to be "connected to" another element, the element may be directly connected to the another element, or an intervening element may exist simultaneously.

An antenna assembly of an embodiment of the present disclosure is applied to an electronic device. In an embodiment, the electronic device may include the cellphone, a tablet computer, a notebook computer, a palmtop computer, a Mobile Internet Device (MID), a wearable device (such as a smart watch, a smart bracelet, a pedometer, etc.), or other communication modules available to arranging an array antenna assembly.

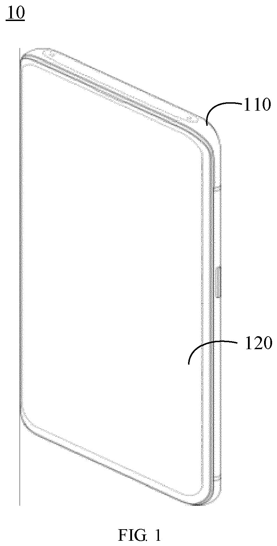

As shown in FIG. 1, in some embodiments of the present disclosure, the electronic device 10 may include a conductive frame 110, a rear cover, a display screen assembly 120, a substrate 130, and a radio frequency circuit. The display screen assembly 120 is fixed on a housing assembly including the conductive frame 110 and the rear cover. An external structure of the electronic device 10 may include the display screen assembly 120 and the housing assembly. The display screen assembly 120 may be configured to display pictures or fonts, and provide an operating interface for a user.

The rear cover is configured to define an outer contour of the electronic device 10. The rear cover may be integrally formed. In a process of forming the rear cover, a structure such as a rear camera hole, a fingerprint-identifying module, a mounting hole of the antenna assembly, or the like, may be defined or arranged on the rear cover. The rear cover may be a non-metal rear cover, for example, the rear cover may be a plastic rear cover, a ceramic rear cover, a 3D glass rear cover, or the like.

In an embodiment, the conductive frame 110 may be a frame structure defining a through hole. A material of the conductive frame 110 may include a metal frame such as an aluminum alloy metal frame, a magnesium alloy metal frame, or the like.

In an embodiment, the conductive frame 110 may be a substantially rectangular frame with substantially rounded corners. The conductive frame 110 may include a first frame and a third frame opposite to the first frame, a second frame and a fourth frame opposite to the second frame. The second frame is connected to the first frame and the third frame. The first frame may be regarded as a top frame of the electronic device 10, the third frame may be regarded as a bottom frame of the electronic device 10, and the second frame and the fourth frame may be regarded as side frames of the electronic device 10.

The antenna assembly may include partially or fully a portion of the conductive frame 110 of the electronic device 10. In some embodiments, a radiator of the antenna assembly may be partially integrated on at least one of the top frame, the bottom frame, a first side frame, and a second side frame of the electronic device 10.

The substrate 130 may be accommodated in an accommodating space defined by the conductive frame 110 and the rear cover. The substrate 130 may be a Printed Circuit Board (PCB) or a Flexible Printed Circuit (FPC). A part of radio frequency circuits for processing radio frequency signals may be integrated on the substrate 130, and a controller capable of controlling operations of the electronic device 10 may also be integrated on the substrate 130. A radio frequency circuit may include but is not limited to the antenna assembly, at least one amplifier, a transceiver, a coupler, a Low Noise Amplifier (LNA), a duplexer, or the like. In addition, the radio frequency circuit may also communicate with a network and other devices by means of a wireless communication. The wireless communication mentioned above may adopt any communication standard or protocol, including but not limited to a Global System of Mobile Communication (GSM), a General Packet Radio Service (GPRS), a Code Division Multiple Access (CDMA), a Wideband Code Division Multiple Access (WCDMA), a Long Term Evolution (LTE), email, a Short Messaging Service (SMS), etc.

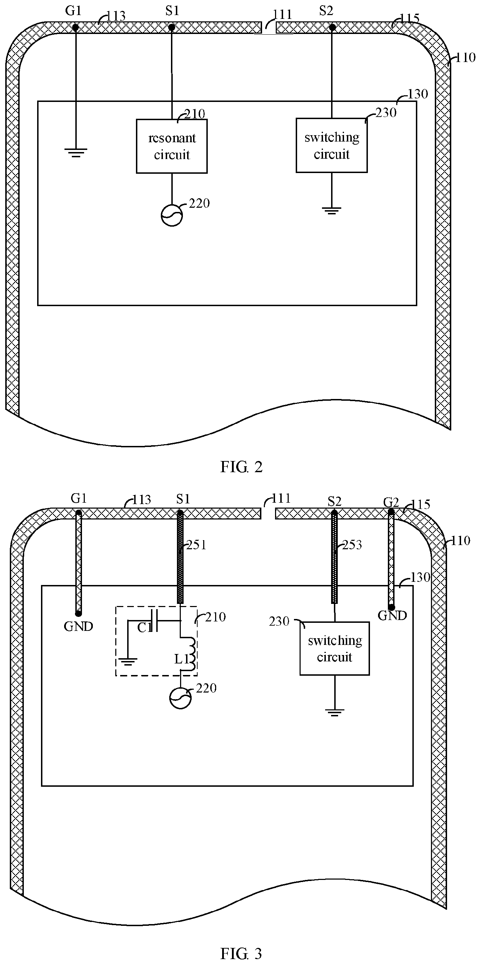

As shown in FIG. 2, an antenna assembly is provided in some embodiments of the present disclosure and includes the conductive frame 110, a resonance circuit 210, a signal source 220 and a switching circuit 230.

At least one slot 111 may be defined in the conductive frame 110. The conductive frame 110 may at least be divided into a first conductive branch 113 and a second conductive branch 115 separating from each other by the at least one slot 111. A feed point S1 may be arranged on the first conductive branch 113 and a connecting point S2 may be arranged on the second conductive branch 115.

In an embodiment, a slot 111 is a part of the antenna assembly and may be understood as a slit. The conductive frame 110 may be divided into at least two independent conductive branches. For example, the slot 111 may be configured to divide the conductive frame 110 into the first conductive branch 113 and the second conductive branch 115 separating from each other. When the number of the at least one slot 111 is N, the conductive frame 110 may be divided into N+1 independent conductive branches.

In an embodiment, the slot 111 may be filled with air, a plastic and/or other dielectrics.

In an embodiment, a shape of the slot 111 may be substantially straight. Alternatively, the slot 111 may have one or more curved shapes.

It should be noted that the slot 111 may be defined in any position of the conductive frame 110. In some embodiments of the present disclosure, the shape, a size, the number of the at least one slot 111, and the position where the slot 111 is defined in the conductive frame 110 are not further limited.

The resonant circuit 210 may be connected to the signal source 220 and the feed point S1. Both the resonant circuit 210 and the signal source 220 may be correspondingly arranged on the substrate 130. The signal source 220 may be configured to output a current signal. The signal source 220 may be coupled to the first conductive branch 113 and feed the current signal to the first conductive branch 113 through the resonant circuit 210 and the feed point S1. The current signal may be coupled to the second conductive branch 115 through the slot 111. The second conductive branch 115 may be taken as a parasitic conductive branch.

The resonant circuit 210 may filter and tune a received current signal, such that multiple resonant frequencies may be excited on the first conductive branch 113 and the second conductive branch 115 after a tuned current signal is fed to the first conductive branch 113 and the second conductive branch 115.

Further, the resonant circuit 210 may be further configured to filter out a radio frequency signal other than a frequency corresponding to the current signal, such that the resonant circuit 210 may be in an on state when the current signal flows through the resonant circuit 210.

The switching circuit 230 may be connected between the connecting point S2 and a ground terminal. The second conductive branch 115 may couple the current signal from the first conductive branch 113 to the second conductive branch 115 by means of being coupled via the slot 11. The switching circuit 230 may perform a switching adjustment on the current signal coupled to the second conductive branch 115 such that the radio frequency signals including multiple operating frequency bands may be radiated simultaneously on the first conductive branch 113 and the second conductive branch 115. At least two of the operating frequency bands may be switchable.

According to the antenna assembly described above, the conductive frame 110 may be divided into the first conductive branch 113 and the second conductive branch 115 through defining a slot 111 in the conductive frame 110. The multiple resonant frequencies may be excited on the first conductive branch 113 and the second conductive branch 115 through the resonant circuit 210, such that the radio frequency signal including the multiple operating frequency bands may be radiated simultaneously on the first conductive branch 113 and the second conductive branch 115. Two of the operating frequency bands of the radio frequency signals may be switchable through the switching circuit 230. In this way, a design of the antenna having double conductive branches sharing a common aperture may be achieved, and the multiple operating frequency bands of the radio frequency signals may share a common slot, such that space-utilizing rates of the slot 111 and the conductive frame 110 of the electronic device 10 may be improved. In addition, an antenna radiator may be not required to be arranged separately, so as to reduce a thickness of the cellphone.

In some embodiments, the first conductive branch 113 and the second conductive branch 115 may be integrated on the first frame or the third frame of the electronic device 10, such that a utilizing rate of the top frame or a utilizing rate of the bottom frame may be improved and a pressure of integrating the antenna assembly on the side frames may be reduced. In this way, the profile heights of the side frames may be reduced, and the profile heights of the side frames may be reduced to values being less than 1mm. The profile heights of the side frames may be regarded as metal widths of the metal frame in a thickness direction of the electronic device 10. A profile height of the conductive frame 110 is one of important factors affecting a radiating efficiency of the conductive frame 110. Under a background that a curvature of a side surface of a curved screen is getting larger and larger, even if antenna clearances of the side frames configured for integrating the antennas are greatly reduced, the antenna assembly may be integrated on the top frame or the bottom frame without affecting flexibility and performances of the antenna assembly.

In an embodiment, the radio frequency signals may include an LTE signal, an operating frequency band of a satellite positioning signal, and a WiFi signal.

The LTE signal may be divided into a Low band (LB), a Middle band (MB), and a High band (HB). In some embodiments of the present disclosure, the LTE signal may include the MB and the HB. A frequency range of the MB may be 1710MHz to 2170MHz, and a frequency range of the HB may be 2300MHz to 2690MHz. An operating frequency band of the MB may include a B1 frequency band and a B3 frequency band.

The satellite positioning signal may include at least one of a Global Positioning System (GPS) signal with a frequency range of 1.2GHz-1.6GHz, a BeiDou Navigation Satellite System (BDS) signal, and a Global Navigation Satellite System (GLONASS) signal. In some embodiments of the present disclosure, an operating frequency band of the satellite positioning signal may include an L1 frequency band.

An operating frequency band of the WiFi signal may include 2400MHz-5000MHz. In some embodiments of the present disclosure, the operating frequency band of the WiFi signal may be a 2.4G frequency band.

In some embodiments of the present disclosure, under an action of the resonant circuit 210, the current signal may be fed into the first conductive branch 113 through the feed point S1. After being coupled to the second conductive branch 115 through the slot 111, the current signal may excite at least two resonant frequencies resonating in a MHB frequency band of the LTE signal, the L1 frequency band of the GPS signal, and the 2.4G frequency band of the WiFi signal, such that the first conductive branch 113 and the second conductive branch 115 may radiate simultaneously the radio frequency signals including the MHB frequency band of the LTE signal, the L1 band of the GPS signal, and the 2.4G frequency band of the WiFi signal. In addition, the switching circuit 230 is arranged, such that the B3 frequency band and the B1 frequency band of the LTE signal may be selected and switched. In this way, an efficiency of the MB may be improved, and a coverage of the GPS signal and the 2.4G frequency band of the WiFi signal may be maintained.

As shown in FIG. 3, in an embodiment, a first ground-returning point G1 may be further arranged on the first conductive branch 113. The feed point S1 may be arranged at a middle position of the first conductive branch 113, and the first ground-returning point G1 may be arranged away from the at least one slot 111.

Both the signal source 220 and the resonant circuit 210 may be arranged on the substrate 130, and the resonant circuit 210 may be coupled to the first conductive branch 113 through an electricity-feeding portion 251. The electricity-feeding portion 251 may be a conductive elastic sheet or a screw. A coupling point between the conductive elastic sheet or the screw and the first conductive branch 113 may be configured as the feed point S1. The feed point S1 may be connected to the resonance circuit 210 through the electricity-feeding portion 251. The current signal output by the signal source 220 may be fed to the first conductive branch 113 through the feed point S1 in an electricity-feeding way of the conductive elastic sheet or the screw after passing through the resonant circuit 210.

In an embodiment, the first ground-returning point G1 may be connected to a ground layer of the substrate 130 through a first connecting portion 252, so as to be communicated to the ground. The first connecting portion 252 may be a conductor such as a spring sheet, the screw, etc., or a flexible circuit board. The first connecting portion 252 may also be a connecting arm made from the same material as the first conductive branch 113. In some embodiments, the first connecting portion 252 and the first conductive branch 113 may be integrally formed to simplify a structure of the antenna assembly.

In an embodiment, a second ground-returning point G2 may be further arranged on the second conductive branch 115. The connecting point S2 may be arranged at a middle position of the second conductive branch 115, and the second ground-returning point G2 may be arranged away from the at least one slot 111.

The switching circuit 230 may be also arranged on the substrate 130 and be coupled to the second conductive branch 115 through a second connecting portion 253. The second connecting portion 253 may be the conductive elastic sheet or the screw. A coupling point between the conductive elastic sheet or the screw and the second conductive branch 115 may be configured as the connecting point S2. The connecting point S2 may be connected to the switching circuit 230 through the second connecting portion 253.

In an embodiment, the second ground-returning point G2 may be connected to the ground layer of the substrate 130 through a third connecting portion 254, so as to be communicated to the ground. The third connecting portion 254 may be the conductor such as the spring sheet, the screw, etc., or the flexible circuit board. The third connecting portion 254 may also be a connecting arm made from the same material as the second conductive branch 115. In some embodiments, the third connecting portion 254 and the second conductive branch 115 may be integrally formed to simplify the structure of the antenna assembly.

As shown in FIG. 3, in an embodiment, the resonant circuit 210 may include a low-pass filter circuit. Two resonant frequencies may be generated on the first conductive branch 113 and the second conductive branch 115 under a resonance of the resonant circuit 210.

In an embodiment, the low-pass filter circuit may include a first capacitor C1 and a first inductor L1. A first end of the first inductor L1 may be connected to a first end of the first capacitor C1 and the feed point S1. A second end of the first inductor L1 may be connected to the signal source 220, and a second end of the first capacitor C1 may be grounded.

It should be noted that, the low-pass filter circuit may also include other components, which is not limited to the examples described in the embodiments of the present disclosure.

By arranging the resonant circuit 210 in the antenna assembly, the two resonant frequencies may be generated on the first conductive branch 113 and the second conductive branch 115. One of the two resonant frequencies may be the L1 frequency band of the GPS signal, and the other of the two resonant frequencies may be the 2.4G frequency band of the WiFi signal or a signal frequency band with a medium-high frequency of a 5G signal.

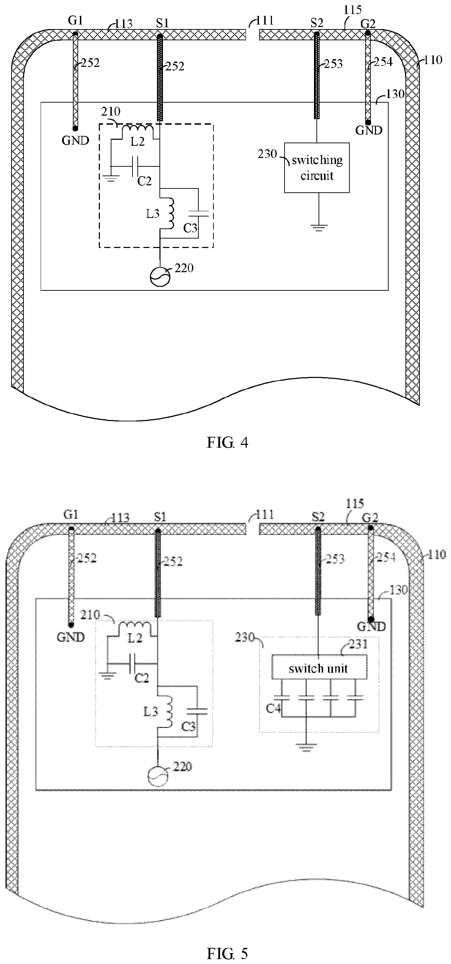

As shown in FIG. 4, in an embodiment, the resonant circuit 210 may include a band-stop band-pass circuit. Three resonant frequencies may be excited on the first conductive branch 113 and the second conductive branch 115 under a resonance adjustment of the resonant circuit 210.

In an embodiment, the band-stop band-pass circuit may include a second capacitor C2, a third capacitor C3, a second inductor L2, and a third inductor L3. A first end of the second inductor L2 and a first end of the second capacitor C2 may be grounded. A second end of the second inductor L2 may be connected to the feed point S1, a second end of the second capacitor C2, a first end of the third capacitor C3, and a first end of the third inductor L3. Both a second end of the third capacitor C3 and a second end of the third inductor L3 may be connected to the signal source 220.

It should be noted that, the band-stop band-pass circuit may also include other components, which is not limited to the examples described in the embodiments of the present disclosure.

By arranging the resonant circuit 210 in the antenna assembly, the three resonant frequencies may be generated on the first conductive branch 113 and the second conductive branch 115, a first one of the three resonance frequencies may be the L1 frequency band of the GPS signal, a second one of the three resonance frequencies may be a signal frequency band with a medium-high frequency of the LTE signal, and a third one of the three resonance frequencies may be the 2.4G frequency band of the WiFi signal.

As shown in FIG. 5, in an embodiment, the switching circuit 230 may include a switch unit 231 and multiple fourth capacitors C4. The switch unit 231 may include a controlling terminal and multiple selecting terminals. The controlling terminal may be connected to the connecting point S2. The selecting terminals may be grounded through the fourth capacitors.

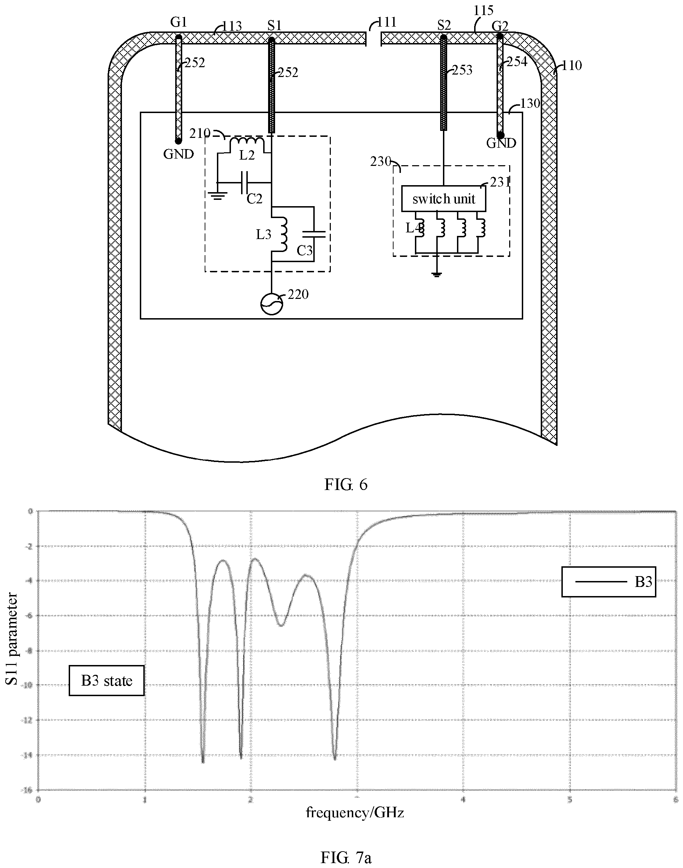

As shown in FIG. 6, in an embodiment, the fourth capacitors of the switching circuit 230 in the above embodiment may be replaced with fourth inductors. Specifically, the switching circuit 230 may include the switching unit 231 and multiple fourth inductors L4. The switch unit 231 may include the controlling terminal and the multiple selecting terminals. The controlling terminal may be connected to the connecting point S2. The selecting terminals may be grounded through the fourth inductors L4.

The number of the selecting terminals of the switch unit 231 may be set according to the number of operating frequency bands which the first conductive branch 113 and the second conductive branch 115 may radiate. Specifically, the switch unit 231 may be a single-pole multiple-throw (SPMT) switch. A moving terminal of the SPMT switch may be configured as the controlling terminal of the switch unit 231, and stationary terminals of the SPMT switch may be configured as the selecting terminals of the switch unit 231. Each of the stationary terminals of the SPMT switch may be connected to a capacitor. A capacitor value of each capacitor may be different.

It should be noted that the switch unit 231 may also include multiple single-pole single-throw switches, multiple single-pole double-throw switches, multiple electronic switch tubes, or the like. The electronic switch tube may be a MOS tube, a transistor, or the like. In the embodiments of the present disclosure, specific components of the switch unit 231 are not further limited, as long as the switch unit 231 may satisfy a switching selecting condition for the multiple fourth capacitors or the multiple fourth inductors.

When the first conductor 113 and the second conductor 115 of the antenna assembly are required to radiate the radio frequency signal in different operating frequency bands, the switch unit 231 may be controlled to select different tuning paths to be turned on, so as to change values of the fourth capacitors or values of the fourth inductors to adjust an operating resonant frequency. In this way, a switching process may be performed between different operating frequency bands.

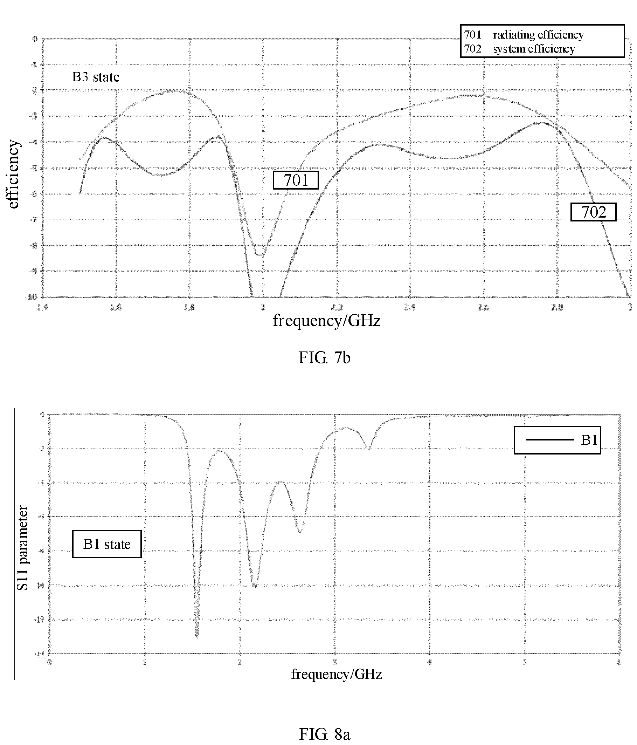

In some embodiments, as shown in FIG. 7a and FIG. 7b, by arranging the resonant circuit 210 in the antenna assembly, three resonant frequencies may be generated on the first conductive branch 113 and the second conductive branch 115, the first one of the three resonance frequencies may be the L1 frequency band of the GPS signal, the second one of the three resonance frequencies may be the signal frequency band with the medium-high frequency of the LTE signal, and the third one of the three resonance frequencies may be the 2.4G frequency band of the WiFi signal. The switching circuit 230 may be configured to select a tuning path which is turned on, such that the first conductive branch 113 and the second conductive branch 115 may simultaneously radiate a radio frequency signal in a HB frequency band of the LTE signal, a radio frequency signal in a B3 frequency band of the LTE signal, a radio frequency signal of the GPS signal, and a radio frequency signal of the 2.4G frequency band of the WiFi signal. As shown in FIG. 7b, both a radiating efficiency and a system efficiency of each operating frequency band where a radio frequency signal is radiated by the first conductive branch 113 and the second conductive branch 115 satisfy a communication requirement.

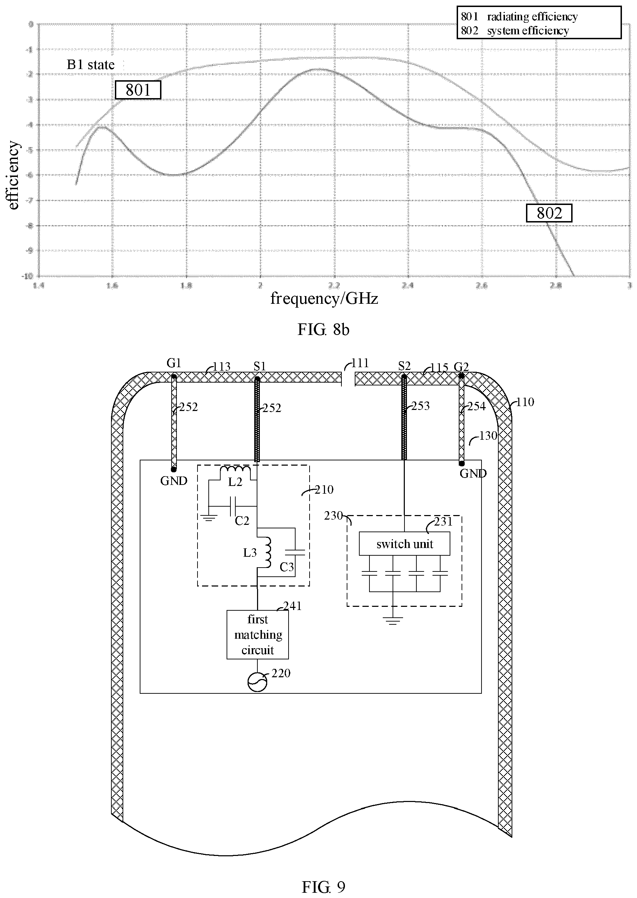

In some embodiments, as shown in FIG. 8a and FIG. 8b, by arranging the resonant circuit 210 in the antenna assembly, three resonant frequencies may be generated on the first conductive branch 113 and the second conductive branch 115, the first one of the three resonance frequencies may be the L1 frequency band of the GPS signal, the second one of the three resonance frequencies may be the signal frequency band with the medium-high frequency of the LTE signal, and the third one of the three resonance frequencies may be the 2.4G frequency band of the WiFi signal. The switching circuit 230 may be configured to select the tuning path which is turned on, such that the first conductive branch 113 and the second conductive branch 115 may simultaneously radiate the radio frequency signal in a HB frequency band of the LTE signal, a radio frequency signal in a B1 frequency band of the LTE signal, the radio frequency signal of the GPS signal, and the radio frequency signal of the 2.4G frequency band of the WiFi signal. As shown in FIG. 8b, both the radiating efficiency and the system efficiency of the each operating frequency band where the radio frequency signal is radiated by the first conductive branch 113 and the second conductive branch 115 satisfy the communication requirement. It should be noted that frequencies within a range of 7-13% of a resonant frequency may be understood as an operating bandwidth of the antenna. For example, when the resonant frequency of the antenna is 1800MHz, and the operating bandwidth is 10% above and below around the resonant frequency, an operating frequency band of the antenna may be 1620MHz-1980MHz.

As shown in FIG. 9, in an embodiment, a matching circuit 241 configured for adjusting a first current signal may be arranged between the first conductive branch 113 and the signal source 220. The matching circuit 241 may be configured to adjusting an input impedance of a first radiator, so as to improve a transmitting performance of the first radiator.

Specifically, the matching circuit 241 may include a combination of capacitors and/or inductors, or the like. In the embodiments of the present disclosure, a specific composition form of the matching circuit 241 is not further limited.

It should be noted that the feed point S1 may be arranged at the middle position of the first conductive branch 113. It can be understood that a specific position of the feed point S1 is associated with the matching circuit 241. That is, the specific position of the feed point S1 may be arranged based on the matching circuit 241.

In an embodiment, the conductive frame 110 may be divided into the first conductive branch 113 and the second conductive branch 115 through defining a slot 111 in the conductive frame 110. The resonant circuit 210 may tune the current signal fed to the first conductive branch 113 and the second conductive branch 115, such that multiple resonant frequencies resonating in the MHB frequency band of the LTE signal, the L1 frequency band of the GPS signal, and the 2.4G frequency band of the WiFi signal. The two of the operating frequency bands of the radio frequency signals may be switchable through the switching circuit 230. In this way, the design of the antenna having double conductive branches sharing the common aperture may be achieved. The GPS signal, a MHB signal, and the WiFi signal may share the common slot, such that space-utilizing rates of the slot 111 and a whole device may be improved.

In an embodiment, the number of the at least one slot defined in the conductive frame may be multiple. Exemplarily, two slots are taken as an example for description. The two slots may include a first slot and a second slot. The conductive frame may be divided into the first conductive branches 113, the second conductive branches 115, and a third conductive branch separating from each other. Both the feed point S1 and a ground-returning point may be correspondingly arranged on the third conductive branch. A third radiator for radiating a third radio frequency signal may be integrated on the third conductive branch. In some embodiments, the third radio frequency signal may be a 2G signal, 3G signal, 5G signal, and a Bluetooth signal.

Further, each feed point S1 may be connected to a filter circuit through the conductive elastic sheet or the screw, and connected to a corresponding signal source 220 through the resonant circuit 210. Each signal source 220 may feed the current signal to a corresponding conductive branch through the resonant circuit 210, the conductive elastic sheet or the screw, and the feed point S1 in sequence, such that a quarter current or currents in other modes may be excited on a conductive branch (the radiator) between the slot and the ground-returning point. In this way, a radiation may be generated and different radio frequency signals may be radiated.

By analogy, when N (N>2) slots 111 are defined in the conductive frame 110, the conductive frame 110 may be divided into N+1 independent conductive branches. Correspondingly, N+1 resonant circuits 210 and N+1 signal sources 220 may also be arranged. N+1 radiators may be integrated on the N+1 independent conductive branches correspondingly and configured to radiate N+1 radio frequency signals each of which has a different operating frequency band.

An electronic device 10 is further provided in some embodiments of the present disclosure. The electronic device 10 may include a substrate 130 and the antenna assembly as described in any of the foregoing embodiments. The substrate 130 may be accommodated in a cavity enclosed by the conductive frame 110. The resonant circuit 210 and the signal source 220 may be arranged on the substrate 130.

When the antenna assembly is applied in the electronic device 10, the first conductive stub 113 and the second conductive stub 115 may share the same slot 111 to simultaneously radiate the radio frequency signals in multiple different operating frequency bands. In this way, the space-utilizing rates of the slot 111 and the conductive frame 110 of the electronic device 10 may be improved. In addition, the antenna radiator may be not required to be arranged separately, so as to reduce the thickness of the cellphone.

Exemplarily, due to a design of a common-aperture-shared antenna, the GPS signal, the MHB signal, and WiFi signal may share the same slot, such that the first radiator and a second radiator may be integrated on the first frame or the third frame of the electronic device 10. In this way, the utilizing rate of the top frame or the utilizing rate of the bottom frame may be improved and the pressure of integrating the antenna assembly on the side frames may be reduced. Further, the profile heights of the side frames may be reduced, and the profile heights of the side frames may be reduced to the values being less than 1mm. The profile heights of the side frames may be regarded as the metal widths of the metal frame in the thickness direction of the electronic device 10. The profile height of the conductive frame 110 is one of the important factors affecting the radiating efficiency of the conductive frame 110. Under the background that the curvature of the side surface of the curved screen is getting larger and larger, the profile heights of the side frames may be limited, resulting in the antenna clearances being greatly reduced. By adopting the design of the common-aperture-shared antenna according to the embodiments of the present disclosure, the antenna assembly may be integrated on the top frame or the bottom frame, so as to ensure the antenna has an enough clearance. In addition, by arranging the resonant circuit 210 and the switching circuit 230 in the antenna assembly, multiple resonant frequencies may be excited on the first conductive branch 113 and the second conductive branch, such that the first conductive branch 113 and the second conductive branch 115 may simultaneously radiate the radio frequency signals including the multiple operating frequency bands. Two of the operating frequency bands of the radio frequency signals may be switchable through the switching circuit 230. In this way, a design requirement of multiple frequency bands and multiple antennas may be satisfied with the top frame or the bottom frame having a limited radiator length.

Any reference to a memory, a storage, a database, or other media made in the embodiments of the present disclosure may include a non-volatile memory and/or a volatile memory. Suitable non-volatile memories may include a read only memory (ROM), a programmable ROM (PROM), an electrically programmable ROM (EPROM), an electrically erasable programmable ROM (EEPROM), or a flash memory. Volatile memories may include a random access memory (RAM), which is configured as an external cache memory. As an illustration but not a limitation, RAM nay be available in various forms such as a static RAM (SRAM), a dynamic RAM (DRAM), a synchronous DRAM (SDRAM), a double data rate SDRAM (DDR SDRAM), an enhanced SDRAM (ESDRAM), a synchronous Link (Synchlink) DRAM (SLDRAM), a Memory Bus (Rambus) Direct RAM (RDRAM), a Direct Rambus Dynamic RAM (DRDRAM), and a Rambus Dynamic RAM (RDRAM).

Each technical feature in the above embodiments may be combined arbitrarily. For a concise description, all possible combinations of various technical features in the above embodiments are not described. Each combination of these technical features which has no contradiction should be regarded within a scope recited by the specification.

Only some implementations of the present disclosure are described in the above embodiments, descriptions of which are relatively specific and detailed but should not be construed as limitations to a patent scope of the present disclosure. It should be noted that those skilled in the art may make some modifications and improvements without departing from a concept of the present disclosure. All of the modifications and improvements belong to a protection scope of the present disclosure. Therefore, the protection scope of the present disclosure shall be subject to the appended claims.

## Claims

1. An antenna assembly, comprising:
a conductive frame, defining at least one slot and divided into at least a first conductive branch and a second conductive branch separating from each other by the at least one slot, wherein a feed point is arranged on the first conductive branch and a connecting point is arranged on the second conductive branch;
a resonant circuit, connected to a signal source and the feed point, the signal source being coupled to the first conductive branch and feeding a current signal to the first conductive branch through the resonant circuit and the feed point, wherein the current signal is coupled to the second conductive branch through the slot, and a plurality of resonant frequencies are generated on the first conductive branch and the second conductive branch under a resonance adjustment of the resonant circuit; and
a switching circuit, connected between the connecting point and a ground terminal, and configured to perform a switching adjustment for the current signal coupled to the second conductive branch such that radio frequency signals comprising a plurality of operating frequency bands are radiated simultaneously on the first conductive branch and the second conductive branch; wherein at least two of the operating frequency bands are switchable.

2. The antenna assembly according to claim 1, wherein the resonant circuit comprises a low-pass filter circuit, wherein two resonant frequencies are generated on the first conductive branch and the second conductive branch under the resonance adjustment of the resonant circuit.

3. The antenna assembly according to claim 2, wherein the low-pass filter circuit comprises a first capacitor and a first inductor, wherein a first end of the first inductor is connected to a first end of the first capacitor and the feed point, a second end of the first inductor is connected to the signal source, and a second end of the first capacitor is grounded.

4. The antenna assembly according to claim 2, wherein one of the two resonant frequencies is a L1 frequency band of a GPS signal, and the other of the two resonant frequencies is a 2.4G frequency band of a WiFi signal or a signal frequency band with a medium-high frequency of a 5G signal.

5. The antenna assembly according to claim 1, wherein the resonant circuit comprises a band-stop band-pass circuit, wherein three resonant frequencies are generated on the first conductive branch and the second conductive branch under the resonance adjustment of the resonant circuit.

6. The antenna assembly according to claim 5, wherein the band-stop band-pass circuit comprises a second capacitor, a third capacitor, a second inductor, and a third inductor, wherein a first end of the second inductor and a first end of the second capacitor are grounded, a second end of the second inductor is connected to the feed point, a second end of the second capacitor, a first end of the third capacitor, and a first end of the third inductor, a second end of the third capacitor and a second end of the third inductor are connected to the signal source.

7. The antenna assembly according to claim 5, wherein a first one of the three resonance frequencies is an L1 frequency band of a GPS signal, a second one of the three resonance frequencies is a signal frequency band with a medium-high frequency of an LTE signal, and a third one of the three resonance frequencies is a 2.4G frequency band of a WiFi signal.

8. The antenna assembly according to claim 1, wherein the switching circuit comprises:
a plurality of fourth capacitors; and
a switch unit, comprising:
a controlling terminal, connected to the connecting point; and
a plurality of selecting terminals, each of the selecting terminals being grounded through one of the fourth capacitors.

9. The antenna assembly according to claim 1, wherein the switching circuit comprises:
a plurality of fourth inductors; and
a switch unit, comprising:
a controlling terminal, connected to the connecting point; and
a plurality of selecting terminals, each of the selecting terminals being grounded through one of the fourth inductors.

10. The antenna assembly according to claim 1, wherein a first ground-returning point is arranged on the first conductive branch, the feed point is arranged at a middle position of the first conductive branch, and the first ground-returning point is arranged away from the at least one slot; a second ground-returning point is arranged on the second conductive branch, the connecting point is arranged at a middle position of the second conductive branch, and the second ground-returning point is arranged away from the at least one slot.

11. The antenna assembly according to claim 1, wherein a matching circuit configured for adjusting an impedance is arranged between the feed point and the signal source.

12. The antenna assembly according to claim 11, wherein the matching circuit comprises a capacitor and/or an inductor.

13. The antenna assembly according to claim 1, wherein the number of the at least one slot is two, the conductive frame being divided into the first conductive branch, the second conductive branch, and a third conductive branch separating from each other by the two slots, wherein a feed point and a ground-returning point are arranged correspondingly on the third conductive branch, and a third radiator for radiating a third radio frequency signal is integrated on the third conductive branch.

14. The antenna assembly according to claim 1, wherein the switching circuit is coupled to the second conductive branch through a second connecting portion.

15. The antenna assembly according to claim 1, wherein the radio frequency signal comprises an LTE signal, a satellite-positioning signal, and a WiFi signal; wherein two switchable operating frequency bands comprise a B1 frequency band and a B3 frequency band.

16. An electronic device, comprising:
a substrate;
a conductive frame, defining at least one slot and divided into at least a first conductive branch and a second conductive branch separating from each other by the at least one slot, wherein a feed point is arranged on the first conductive branch and a connecting point is arranged on the second conductive branch;
a resonant circuit, connected to a signal source and the feed point, the signal source being coupled to the first conductive branch and feeding a current signal to the first conductive branch through the resonant circuit and the feed point, wherein the current signal is coupled to the second conductive branch through the slot, and a plurality of resonant frequencies are generated on the first conductive branch and the second conductive branch under a resonance adjustment of the resonant circuit; and
a switching circuit, connected between the connecting point and a ground terminal, and configured to perform a switching adjustment for the current signal coupled to the second conductive branch such that radio frequency signals comprising a plurality of operating frequency bands are radiated simultaneously on the first conductive branch and the second conductive branch; wherein at least two of the operating frequency bands are switchable;
wherein the substrate is accommodated in a cavity enclosed by the conductive frame, and the resonant circuit and the signal source are arranged on the substrate.

17. The electronic device according to claim 16, wherein the resonant circuit comprises a low-pass filter circuit, wherein two resonant frequencies are generated on the first conductive branch and the second conductive branch under the resonance adjustment of the resonant circuit.

18. The electronic device according to claim 16, wherein the resonant circuit comprises a band-stop band-pass circuit, wherein three resonant frequencies are generated on the first conductive branch and the second conductive branch under the resonance adjustment of the resonant circuit.

19. The electronic device according to claim 16, wherein the switching circuit comprises:
a plurality of fourth capacitors; and
a switch unit, comprising:
a controlling terminal, connected to the connecting point; and
a plurality of selecting terminals, each of the selecting terminals being grounded through one of the fourth capacitors.

20. The electronic device according to claim 16, wherein the conductive frame comprises:
a first frame;
a third frame, opposite to the first frame;
a second frame; and
a fourth frame, opposite to the second frame;
wherein the second frame is connected to the first frame and the third frame, and the first conductive branch and the second conductive branch are integrated in the first frame or the third frame of the electronic device.
